# EUROPEAN PATENT SPECIFICATION

(11) **EP 3 637 892 B1**
(45) Date of publication and mention of the grant of the patent: **26.07.2023**
(21) Application number: 17913506.6
(22) Date of filing: 16.06.2017
(51) Int. Cl.: H04W 76/22, H04W 72/1268, H04W 72/231

(54) **DATA TRANSMISSION METHOD, TERMINAL DEVICE, AND NETWORK DEVICE**
DATENÜBERTRAGUNGSVERFAHREN, ENDGERÄTEVORRICHTUNG UND NETZWERKVORRICHTUNG
PROCÉDÉ DE TRANSMISSION DE DONNÉES, DISPOSITIF TERMINAL ET DISPOSITIF DE RÉSEAU

(43) Date of publication of application: 15.04.2020
(73) Proprietor: GUANGDONG OPPO MOBILE TELECOMMUNICATIONS CORP., LTD., Wusha, Chang'an Dongguan, Guangdong 523860 (CN)
(72) Inventor: TANG, Hai, Dongguan Guangdong 523860 (CN)
(74) Representative: Tansini, Elio Fabrizio
(86) International application number: PCT/CN2017/088688
(87) International publication number: WO 2018/227567

(56) References cited:
- EP-A1- 3 582 429
- EP-A1- 3 606 274
- EP-A1- 3 641 188
- CN-A- 105 706 387
- CN-A- 106 134 240
- SHARP: "Enable/Disable PDCP Duplication", 3GPP DRAFT; R2-1704941 ENABLE_DISABLE PDCP DUPLICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Hangzhou, China; 20170515 - 20170519 14 May 2017 (2017-05-14), XP051275456, Retrieved from the Internet: URL:http://www.3gpp.org/ftp/Meetings_3GPP_ SYNC/RAN2/Docs/ [retrieved on 2017-05-14]
- CATT: "PDCP Duplication", 3GPP DRAFT; R2-1703114, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Spokane, USA; 20170403 - 20170407 3 April 2017 (2017-04-03), XP051245053, Retrieved from the Internet: URL:http://www.3gpp.org/ftp/Meetings_3GPP_ SYNC/RAN2/Docs/ [retrieved on 2017-04-03]
- NTT Docomo inc.: "Status Report of WI on New Radio Access Technology; rapporteur: NTT DOCOMO RP-171505", status report to TSG; 3GPP TSG RAN meeting #76 RP-1711505, no. RP-1711505, 9 June 2017 (2017-06-09), pages 1-218, XP009517796,
- ZTE: "Consideration on the activation/deactivation of data duplication for CA", 3GPP DRAFT; R2-1704660 CONSIDERATION ON THE ACTIVATION OR DEACTIVATION OF DATA DUPLICATION FOR CA, 3RD GENERATION PARTNERSHIP PROJECT (3GPP), MOBILE COMPETENCE CENTRE ; 650, ROUTE DES LUCIOLES ; F-069 , vol. RAN WG2, no. Hangzhou, China; 20170515 - 20170519 5 May 2017 (2017-05-05), XP051263847, Retrieved from the Internet: URL:http://www.3gpp.org/ftp/tsg_ran/WG2_RL 2/TSGR2_98/Docs/ [retrieved on 2017-05-05]
- NOKIA ET AL: "Duplication Impacts to MAC", 3GPP DRAFT; R2-1704272 DUPLICATION IMPACTS TO MAC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Hangzhou, China; 20170515 - 20170519 14 May 2017 (2017-05-14), XP051274850, Retrieved from the Internet: URL:http://www.3gpp.org/ftp/Meetings_3GPP_ SYNC/RAN2/Docs/ [retrieved on 2017-05-14]

## Description

### Technical Field

Implementations of the present application relate to the field of communication, and more particularly, relate to a method for transmitting data, a terminal device, and a network device.

### Background

Under a scenario of carrier aggregation, Packet Data Convergence Protocol (PDCP) can support a data duplication function, i.e., a PDCP Protocol Data Unit (PDU) is duplicated into two duplications (possibly more duplications) to improve reliability of data transmission. In the prior art, a default state of a PDCP data duplication and transmission function is used for data transmission, which is not flexible enough.

SHARP: "Enable/Disable PDCP Duplication", 3GPP DRAFT; R2-1704941, 3GPP TSG-RAN2 Meeting #98, Hangzhou, China, 15-19 May 2017, discusses the need for dynamic control of UL PDCP duplication and if UL PDCP duplication is supported, possible solutions to achieve dynamic control. NOKIA ET AL: "Duplication Impacts to MAC", 3GPP DRAFT; R2-1704272, 3GPP TSG-RAN WG2 Meeting #98, discusses control of duplication using MAC CE containing a bitmap with one bit per configured radio bearer to either turn on or off duplication.

### Summary

In view of this, implementations of the present application provide a method for transmitting data, a terminal device and a network device, which is beneficial to improving flexibility of data transmission. The present invention provides a method for transmitting data, a terminal device and a network device as defined in the independent claims. Further improvements and embodiments are provided in the dependent claims.

### Brief Description of Drawings

FIG. 1 is a schematic diagram of an application scenario according to an implementation of the present application.
FIG. 2 shows a schematic diagram of protocol architecture of data duplication and transmission under a scenario of carrier aggregation.
FIG. 3 is a schematic block diagram of a method for transmitting data according to an implementation of the present application.
FIG. 4 is another schematic block diagram of a method for transmitting data according to an implementation of the present application.
FIG. 5 is a schematic block diagram of a terminal device for transmitting data according to an implementation of the present application.
FIG. 6 is a schematic block diagram of a network device for transmitting data according to an implementation of the present application.
FIG. 7 is another schematic block diagram of a terminal device for transmitting data according to an implementation of the present application.
FIG. 8 is another schematic block diagram of a network device for transmitting data according to an implementation of the present application.

### Detailed Description

Technical solutions in implementations of the present application will be clearly and completely described below with reference to the drawings in the implementations of the present application.

It should be understood that the technical solutions of the implementations of the present application may be applied to various communication systems, such as, a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, a LTE Frequency Division Duplex (FDD) system, a LTE Time Division Duplex (TDD) system, a Universal Mobile Telecommunication System (UMTS) system, a Worldwide Interoperability for Microwave Access (WiMAX) communication system, a New Radio (NR) System, or a future 5G system, etc.

Specifically, the technical solutions of the implementations of the present application may be applied to various communication systems based on non-orthogonal multiple access technologies, such as a Sparse Code Multiple Access (SCMA) system, and a Low Density Signature (LDS) system, etc. The SCMA system and the LDS system may also be referred to as other names in the field of communication. Further, the technical solutions of the implementations of the present application may be applied to a multi-carrier transmission system employing a non-orthogonal multiple access technology, such as an Orthogonal Frequency Division Multiplexing (OFDM) system employing the non-orthogonal multiple access technology, a Filter Bank Multi-Carrier (FBMC) system, a Generalized Frequency Division Multiplexing (GFDM) system, a Filtered OFDM (F-OFDM) system, or the like.

A terminal device in the implementations of the present application may be referred to a user equipment (UE), an access terminal, a subscriber unit, a subscriber station, a mobile station, a mobile platform, a remote station, a remote terminal, a mobile device, a user terminal, a terminal, a wireless communication device, a user agent or a user apparatus. An access terminal may be a cellular phone, a cordless phone, a Session Initiation Protocol (SIP) phone, a Wireless Local Loop (WLL) station, a Personal Digital Assistant (PDA), a handheld device with a wireless communication function, a computing device or another processing device connected to a wireless modem, an on-board device, a wearable device, a terminal device in a future 5G network, or a terminal device in a future evolved Public Land Mobile Network (PLMN), etc., which is not restricted in the implementations of the present application.

A network device in the implementations of the present application may be a device for communicating with a terminal device. The network device may be a Base Transceiver Station (BTS) in GSM or CDMA, a NodeB (NB) in a WCDMA system, or may be an Evolutional NodeB (eNB or eNodeB) in an LTE system, or may be a wireless controller under a scenario of a Cloud Radio Access Network (CRAN), or the network device may be a relay station, an access point, an on-board device, a wearable device, a network device in a future 5G network or a network device in the future evolved PLMN, etc., which is not restricted in the implementations of the present application.

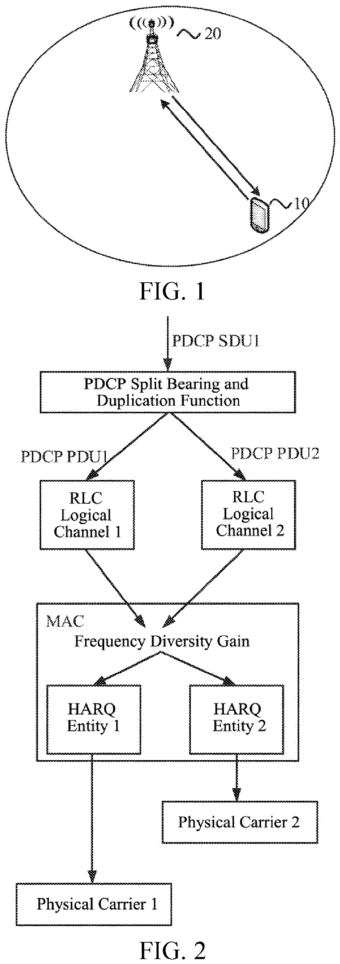

FIG. 1 is a schematic diagram of an application scenario according to an implementation of the present application. A communication system in FIG. 1 may include a terminal device 10 and a network device 20. The network device 20 is configured to provide communication services for the terminal device 10 and is connected to a core network. The terminal device 10 accesses the network by searching for a synchronization signal, or a broadcast signal, etc., transmitted by the network device 20 to communicate with a network. Arrows shown in FIG. 1 may represent uplink/downlink transmission through cellular links between the terminal device 10 and the network device 20.

Under a scenario of carrier aggregation, the PDCP may support a data duplication function, i.e., the data duplication function of the PDCP is utilized, so that duplicated data corresponds to two or more logical channels, and finally it ensures that multiple duplicated PDCP PDUs which are same can be transmitted on different aggregated carriers for the physical layer, thus frequency diversity gain is achieved to improve reliability of data transmission.

For ease of understanding, how to schedule duplicated data on different physical carriers will be briefly described below with reference to FIG. 2. As shown in FIG. 2, a PDCP layer has a split bearing and duplication function, and a data process of PDCP SDU1 is duplicated and encapsulated into PDCP PDU1 and PDCP PDU2. The PDCP PDU1 and the PDCP PDU2 have same contents, i.e., payloads and headers borne by the PDCP PDU1 and the PDCP PDU2 are the same. The PDCP PDU1 and the PDCP PDU2 are respectively mapped to different RLC entities, and the RLC entities place the PDCP PDU1 and the PDCP PDU2 on different logical channels (Logical Channel 1 and Logical Channel 2). After knowing which logical channels transmit duplicated data of a same PDCP PDU, the MAC transmits these duplicated data on different carriers through different Hybrid Automatic Repeat Request (HARQ) entities. For example, the duplicated data borne in the Logical Channel 1 is transmitted on Physical Carrier 1 through HARQ Entity 1, and the duplicated data borne in the Logical Channel 2 is transmitted on Physical Carrier 2 through HARQ Entity 2.

Although data duplication and transmission of the PDCP layer can effectively improve reliability of data transmission by utilizing diversity gain, how to flexibly use the data duplication and transmission function of the PDCP is a problem to be solved.

Those skilled in the art understand that an uplink PDCP data duplication function may be configured based on a Radio Bearer (RB), that is, different RBs may be configured to support data duplication and transmission of the PDCP or not be configured to support data duplication and transmission of the PDCP.

RB is a general name of a series of protocol entities and configurations allocated by a base station to a user equipment, and includes a PDCP protocol entity, a Radio Link Control (RLC) protocol entity, and a series of resources allocated for the MAC and PHY. An RB includes a SRB and a DRB. The SRB is a channel through which signaling messages of a system are actually transmitted, and the DRB is a channel through which user data are actually transmitted.

It should be understood that the terms "system" and "network" are often used interchangeably in this document. The term "and/or" in this document is merely an association relationship describing associated objects, indicating that there may be three relationships, for example, A and/or B may indicate three cases: A alone, A and B, and B alone. In addition, the symbol "/" in this document generally indicates that objects before and after the symbol "/" have an "or" relationship.

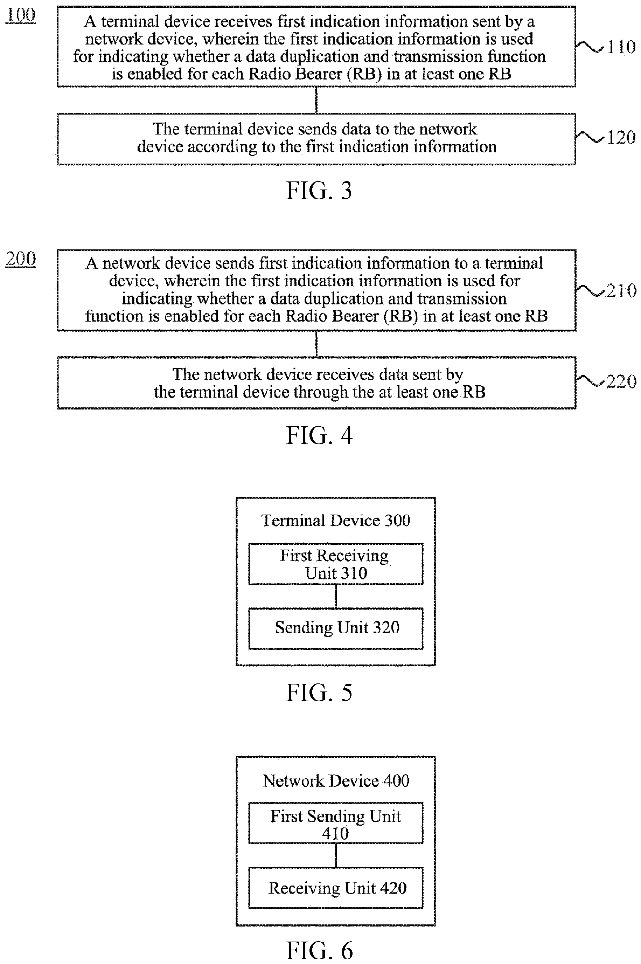

FIG. 3 is a schematic block diagram of a method 100 for transmitting data according to an implementation of the present application. As shown in FIG. 3, the method 100 includes acts S110 and S120.

In S110, a terminal device receives first indication information sent by a network device, wherein the first indication information is used for indicating whether a data duplication and transmission function is enabled for each Radio Bearer (RB) in at least one RB.

In S120, the terminal device sends data to the network device according to the first indication information.

Specifically, the network device may decide by itself whether a data duplication and transmission function needs to be enabled for a certain RB. For example, the network device may make the decision according to whether a current service has a reliability requirement for data transmission. If high reliability is required for data transmission, the network device may decide to adopt data duplication and transmission. The network device may also decide how many RBs are used and which RBs are used for transmission of duplicated data. And the network device may inform the terminal device of an identification of a selected RB, or the network device may inform the terminal device that whether each RB is used to transmit the duplicated data. After receiving the indication information sent by the network device, the terminal device may further send data to the network device according to the indication information. For example, if the indication information indicates that a certain RB is used for transmitting duplicated data, then the terminal device may use the RB to transmit the duplicated data to the network device. If the indication information indicates that a certain RB is used for transmitting non-duplicated data, then the terminal device may use the RB to transmit the non-duplicated data to the network device.

Therefore, in the method for transmitting data according to the implementation of the present application, data is send based on the indication of the network device, which is beneficial to improving flexibility of data transmission.

In an implementation of the present application, receiving, by the terminal device, the first indication information sent by the network device, includes: the terminal device receives the first indication information sent by the network device through a Medium Access Control (MAC) Control Element (CE).

It should be understood that the first indication information proposed by the implementations of the present application is borne in an MAC signaling; or the first indication information may be borne in a signaling of another layer, such as a PHY signaling, an RLC layer signaling, etc., which is not restricted in the implementations of the present application..

In an implementation of the present application, the first indication information carries an identification of the each RB, wherein the identification of the each RB is used for indicating that the data duplication and transmission function is enabled for a corresponding RB, or the identification of the each RB is used for indicating that the data duplication and transmission function of a corresponding RB is deactivated.

Specifically, the network device and the terminal device may pre-agree that an identification of an RB sent by the network device to the terminal device indicates that the data duplication and transmission function may be used for the RB, or an identification of an RB sent by the network device to the terminal device indicates that the data duplication and transmission function may not be used for the RB. Then after determining on which RBs the data duplication and transmission function may be used or on which RBs the data duplication and transmission function may not be used, the network device may send identifications of these RBs to the terminal device. Then after receiving the identifications of the RBs, the terminal device knows on which RBs the data duplication and transmission function may be used and on which RBs the data duplication and transmission function may not be used according to the agreed rule and then the terminal device may use the corresponding RBs to send duplicated data or non-duplicated data.

In an implementation of the present application, the first indication information is a bit map, wherein each bit in the bit map corresponds one-to-one with the each RB, and a value of the each bit indicates whether a data duplication and transmission function is enabled for a corresponding RB.

Specifically, the network device may also explicitly indicate whether a data duplication and transmission function is enabled for a certain RB. For example, the network device may pre-agree with the terminal device that 1 bit is used to indicate whether a data duplication and transmission function is enabled for a certain RB. For example, "1" indicates that a data duplication and transmission function is enabled for an RB, that is, the terminal device may use the RB to transmit duplicated data, and "0" indicates that a data duplication and transmission function of an RB is deactivated, that is, the terminal device may use the RB to transmit non-duplicated data. Then the network device may send indication information to the terminal device, and there is one bit in the indication information independently used for indicating whether a data duplication and transmission function is enabled for the RB. The network device may also multiplex one bit in the indication information, that is, the bit is originally included in the indication information to indicate other information, but the bit may indicate whether a data duplication and transmission function is enabled for the RB at the same time. Similarly, if the network device needs to explicitly indicate whether a data duplication and transmission function is enabled for multiple RBs, the network device may use a bit map and the number of bits in the bit map represents the number of RBs indicated by the network device to the terminal device, and each bit in the bit map is used for indicating whether a data duplication and transmission function is enabled for the RB represented by the each bit. For example, in general, the number of DRBs in wireless communication is up to 8, and a bit map of 8 bits may be used. The 8 DRBs may be mapped to the bit map in advance, that is, each bit in the bit map represents one DRB in the 8 DRBs, and the network device and the terminal device both know this mapping relationship in advance. Then, after the terminal device receives the bit map, the terminal device may check whether a data duplication and transmission function is enabled for a DRB represented by each bit according to the mapping relationship.

It should be understood that the above two indication modes are only schematic illustrations, and implementations of the present application are not restricted to them. Any mode for indicating whether a data duplication and transmission function is enabled for an RB is within the protection scope of implementations of the present application.

Optionally, in an implementation of the present application, sending, by the terminal device, the data to the network device according to the first indication information, includes: the terminal device determines that the data duplication and transmission function is enabled for a first RB in the at least one RB according to the first indication information; and the terminal device sends duplicated data to the network device through multiple logical channels corresponding to a Packet Data Convergence Protocol (PDCP) entity corresponding to the first RB.

If the network device indicates to the terminal device that a data duplication and transmission function is enabled for a certain RB, then the terminal device may use the RB to send duplicated data to the network device. Specifically, the terminal device needs to send the duplicated data to the network device through multiple RLC entities corresponding to the PDCP entity corresponding to the RB. One RLC entity may correspond to one logical channel. Taking FIG. 2 as an example, an entire data transmission path in FIG. 2 may be referred to as one DRB. In the figure, one DRB may include one PDCP entity and two RLC entities, and be mapped to two different physical carriers through an MAC entity. If the network device indicates that a data duplication and transmission function is enabled for the DRB shown in FIG. 2, then the terminal device may directly duplicate a PDCP PDU at the PDCP entity into two duplications, and respectively place the two duplications on two RLC entities for transmission, and then the two PDUs may be placed on different physical carriers for transmission, thus frequency diversity gain is achieved to improve reliability of data transmission.

It should be understood that the above description uses an example that one PDCP entity corresponds to two RLC entities for transmission of duplicated data. In an implementation of the present application, multiple RLC entities may correspond to one PDCP entity. When duplicated data needs to be transmitted, a PDCP PDU may be directly duplicated into multiple duplications and placed on the multiple RLCs corresponding to the PDCP for transmission, which is not restricted in the implementations of the present application.

Optionally, if a previous state of the RB is the data duplication and transmission function is deactivated, that is, duplicated data has been previously transmitted on the RB, but data transmitted on the RB last time is non-duplicated data, then the network may have configured for the RB one PDCP entity corresponding to multiple RLC entities, but in the last transmission, the terminal device adopts only a certain RLC entity in the multiple RLC entities to transmit the non-duplicated data or a part of the multiple RLC entities to transmit the non-duplicated data. And if the network device indicates that the data duplication and transmission function is enabled for the RB, then the terminal device may directly use the multiple RLC entities to transmit duplicated data or directly used a part of the multiple RLC entities to transmit duplicated data.

Optionally, if a default state configured for an RB is a data duplication and transmission function is deactivated, it can be understood that the RB has been used for transmitting non-duplicated data all the time. In this case, the network may have configured for the RB one PDCP corresponding to one RLC entity, then when the network device indicates a data duplication and transmission function is enabled for the RB, the terminal device needs to use at least one other RLC entity to send duplicated data to the network device in addition to using the one RLC entity corresponding to the PDCP. The other RLC entity to be used may be decided by the PDCP entity or may be indicated by the network device.

Optionally, in an implementation of the present application, before the terminal device sends the duplicated data to the network device through the multiple logical channels corresponding to the Packet Data Convergence Protocol (PDCP) entity corresponding to the first RB, the method further includes: when the PDCP entity only corresponds to one logical channel, the terminal device receives second indication information, wherein the second indication information is used for indicating at least one other logical channel used for transmitting the duplicated data.

Specifically, the second indication information may be an identification of a logical channel corresponding to a certain RLC entity or identifications of logical channels corresponding to certain RLC entities. In other words, the network device may agree in advance that as long as the terminal device receives identifications of certain logical channels, it may indicate that RLC entities corresponding to the logical channels may be associated with a PDCP of a certain RB. Or the network device may agree in advance that as long as the terminal device receives identifications of certain logical channels, it may indicate that an RLC entity corresponding to a logical channel other than the logical channels may be associated with a certain RLC entity.

Similarly, it may explicitly indicate that an RLC entity corresponding to a certain logical channel may be associated with a PDCP corresponding to a certain RB. Assuming that the terminal device may agree that "1" represents Logical Channel 0 and "0" represents Logical Channel 1, then after the terminal device receives the indication information related to a certain RB, the terminal device may know that an RLC entity corresponding to a certain logical channel may be associated with a PDCP entity corresponding to the RB.

Optionally, if a default state configured for an RB is a data duplication and transmission function is deactivated, it may be understood that non-duplicated data has been transmitted on the RB all the time. In this case, the network may have configured for the RB one PDCP corresponding to multiple RLC entities. That is, the network may have let multiple RLC entities correspond to the PDCP entity corresponding to the RB, but the network does not use the multiple RLC entities to transmit duplicated data previously, and the network device transmits non-duplicated data previously. For example, the terminal device may use one RLC entity in the multiple RLC entities or the multiple RLC entities corresponding to the PDCP corresponding to the RB to transmit non-duplicated data. Then when the network device indicates that a data duplication and transmission function is enabled for the RB, the terminal device may directly use a part or all of the RLC entities in the multiple RLC entities to transmit the duplicated data.

It should be understood that if the terminal device uses a part of the RLC entities in the multiple RLC entities to transmit the duplicated data, the terminal device may decide by itself which RLC entities are used to transmit the duplicated data, or the network device may indicate which RLC entities are used to transmit the duplicated data.

It should be further understood that the indication of which RLC entities are used for transmitting duplicated data is similar as the above, and it may also be an identification or an explicit indication of a logical channel corresponding to the RLC entity sent to the terminal device.

In an implementation of the present application, sending, by the terminal device, the data to the network device according to the first indication information, includes: the terminal device determines that the data duplication and transmission function of the first RB in the at least one RB is deactivated according to the first indication information; and the terminal device sends non-duplicated data to the network device through a logical channel corresponding to a PDCP entity corresponding to the first RB.

Specifically, if the network device indicates to the terminal device that the data duplication and transmission function of a certain RB is deactivated, that is, the RB is used by the terminal device to transmit duplicated data last time, then the PDCP entity corresponding to the RB corresponds to multiple RLC entities. After receiving the indication from the network device, the terminal device may use one or more RLC entities in the multiple RLC entities corresponding to the PDCP entity corresponding to the RB to transmit non-duplicated data.

Optionally, the terminal device may decide by itself which RLC entities in the multiple RLC entities to use for transmission of non-duplicated data based on a certain rule. The network device may also send an indication to the terminal device to indicate which RLC entities of the multiple RLC entities are used for transmission of non-duplicated data. These examples are not part of the claimed invention.

In an implementation, the network device sends an indication to the terminal device to indicate which RLC entities in the multiple RLC entities cannot transmit non-duplicated data, and then the terminal device uses other RLC entities in the multiple RLC entities to transmit the non-duplicated data. The terminal device may release the RLC entities, in the multiple RLC entities, which are not used for transmitting non-duplicated data.

Optionally, the network device may carry the above first indication information and the above second indication information in one message, i.e., the above information indicating whether the data duplication and transmission function is enabled for an RB and the above information indicating a logical channel corresponding to another RLC entity. For example, a table may be used, each column of the table represents one RB, and each row of the table represents the first indication information or the second indication information. The details are shown in Table 1.

**Table 1**

| | | | | | | | |
|---|---|---|---|---|---|---|---|
| 0 | 1 | 0 | 0 | 0 | 1 | 1 | 0 |
| 0 | 0 | 0 | 0 | 0 | 0 | 1 | 0 |

As shown in Table 1, the network device and the terminal device may agree on a meaning of the table in advance, that is, what each row of the table represents, what each column of the table represents, and what each value of the table represents. For example, the first row in Table 1 indicates whether the data duplication and transmission function is enabled for each RB in 8 RBs. The second row in Table 1 indicates which logical channel is stopped to be used for each RB on which the data duplication and transmission function is deactivated in the 8 RBs. A same column in Table 1 indicates a same RB. In this table, when the data duplication and transmission function is enabled for an RB indicated by the first row, the value of the second row in this column may be ignored. Specifically, the above Table 1 indicates that the data duplication and transmission function is enabled for RB1, RB5, and RB6, while the data duplication and transmission function of RB0, RB2, RB3, RB4, and RB7 is deactivated. And Logical Channel 0 is stopped for RB0, RB2, RB3, RB4, and RB7 (assuming that "0" in the first row represents the data duplication and transmission function is deactivated, "1" in the first row represents the data duplication and transmission function is enabled, "0" in the second row represents Logical Channel 0, and "1" in the second row represents Logical Channel 1).

It should be understood that the above description takes two values "0" and "1" as examples, and a specific value of each bit in the second row may also be a value in a set, which should not be restricted to "0" and "1". For example, "0" to "2" may respectively represent Logical Channels 0 to 2, which is not restricted in implementations of the present application, and the meaning represented by the above values is not restricted.

FIG. 4 is a schematic block diagram of a method 200 for transmitting data according to an implementation of the present application. As shown in FIG. 4, the method 200 includes acts S210 and S220.

In S210, a network device sends first indication information to the terminal device, wherein the first indication information is used for indicating whether a data duplication and transmission function is enabled for each Radio Bearer (RB) in at least one RB.

In S220, the network device receives data sent by the terminal device through the at least one RB.

Therefore, the method for transmitting data in the implementation of the present application is beneficial to improving flexibility of data transmission.

In an implementation of the present application, sending, by the network device, the first indication information to the terminal device, includes: the network device sends the first indication information to the terminal device through a Media Access Control (MAC) Control Element (CE).

In an implementation of the present application, the first indication information carries an identification of the each RB, wherein the identification of the each RB is used for indicating that the data duplication and transmission function is enabled for a corresponding RB, or the identification of the each RB is used for indicating that the data duplication and transmission function of a corresponding RB is deactivated.

In an implementation of the present application, the first indication information is a bit map, wherein each bit in the bit map corresponds one-to-one with the each RB, and a value of the each bit indicates whether a data duplication and transmission function is enabled for a corresponding RB.

Optionally, in an implementation of the present application, the first indication information is used for indicating the data duplication and transmission function is enabled for a first RB in the at least one RB. The network device receives the data sent by the terminal device through the at least one RB, includes: the network device receives duplicated data sent by the terminal device through multiple logical channels corresponding to a Packet Data Convergence Protocol (PDCP) entity corresponding to the first RB.

Optionally, in an implementation of the present application, the method further includes: when the PDCP entity only corresponds to one logical channel, the network device sends second indication information to the terminal device, wherein the second indication information is used for indicating at least one other logical channel used for transmitting duplicated data.

In an implementation of the present application, the first indication information is used for indicating that the data duplication and transmission function of a first RB in the at least one RB is deactivated. Receiving, by the network device, the data sent by the terminal device through the at least one RB, includes: the network device receives non-duplicated data sent by the terminal device through a logical channel corresponding to a PDCP entity corresponding to the first RB.

In an implementation of the present application, the method further includes: when the PDCP entity corresponds to multiple logical channels, the network device sends second indication information to the terminal device, wherein the second indication information is used for a second logical channel not used for transmitting data in the multiple logical channels. Alternatively, the second indication information is used for indicating a first logical channel used for transmitting data in the multiple logical channels, and this alternative is not part of the claimed invention.

Optionally, in an implementation of the present application, the at least one RB includes a Data Radio Bearer (DRB) and/or a Signaling Radio Bearer (SRB).

It should be understood that interaction between the network device and the terminal device, and related characteristics and functions, etc., described by the network device, correspond to related characteristics and functions of the terminal device. Moreover, related contents have been described in detail in the above method 100, and will not be repeated here for the sake of brevity.

It should be understood that in various implementations of the present application, values of sequence numbers in the aforementioned processes do not indicate an order of execution, and the order of execution of various processes should be determined by their functions and internal logics, and should not constitute any limitation on implementation processes of implementations of the present application.

The methods for transmitting data according to the implementations of the present application have been described above in detail. Devices for transmitting data according to implementations of the present application will be described below with reference to FIGs. 5 to 8. Technical features described in the method implementations are applicable to the following device implementation.

FIG. 5 is a schematic block diagram of a terminal device 300 according to an implementation of the present application. As shown in FIG. 5, the terminal device 300 includes a receiving unit 310 and a processing unit 320.

The first receiving unit 310 is used for receiving first indication information sent by a network device, wherein the first indication information is used for indicating whether a data duplication and transmission function is enabled for each Radio Bearer (RB) in at least one RB.

The sending unit 320 is used for sending data to the network device according to the first indication information.

Therefore, the terminal device of the implementation of the present application is beneficial to improving flexibility of data transmission.

In an implementation of the present application, the first receiving unit 210 is specifically used for receiving the first indication information sent by the network device through a Media Access Control (MAC) Control Element (CE).

In an implementation of the present application, the first indication information carries an identification of the each RB, wherein the identification of the each RB is used for indicating that the data duplication and transmission function is enabled for a corresponding RB, or the identification of the each RB is used for indicating that the data duplication and transmission function of a corresponding RB is deactivated.

In an implementation of the present application, the first indication information is a bit map, wherein each bit in the bit map corresponds one-to-one with the each RB, and a value of the each bit indicates whether a data duplication and transmission function is enabled for a corresponding RB.

Optionally, in an implementation of the present application, the sending unit 320 is specifically used for determining that the data duplication and transmission function is enabled for a first RB in the at least one RB according to the first indication information; and sending duplicated data to the network device through multiple logical channels corresponding to a Packet Data Convergence Protocol (PDCP) entity corresponding to the first RB.

Optionally, in an implementation of the present application, the terminal device 300 further includes: a second receiving unit, used for, when the PDCP entity corresponds to only one logical channel, receiving second indication information, wherein the second indication information is used for indicating at least one other logical channel for transmitting the duplicated data.

In an implementation of the present application, the sending unit 320 is specifically used for sending non-duplicated data to the network device through a logical channel corresponding to a PDCP entity corresponding to the first RB.

Optionally, in an implementation of the present application, the sending unit 320 is specifically used for: when the PDCP entity corresponds to multiple logical channels, receiving second indication information sent by the network device, wherein the second indication information is used for indicating a first logical channel used for transmitting data in the multiple logical channels; and sending the non-duplicated data to the network device through the first logical channel. This implementation is not part of the claimed invention.

In an implementation of the present application, the sending unit 320 is specifically used for: when the PDCP entity corresponds to multiple logical channels, receiving second indication information sent by the network device, wherein the second indication information is used for indicating a first logical channel that is not used to transmit data in the multiple logical channels; and sending non-duplicated data to the network device through a second logical channel other than the first logical channel in the multiple logical channels.

Optionally, in an implementation of the present application, the at least one RB includes a Data Radio Bearer (DRB) and/or a Signaling Radio Bearer (SRB).

It should be understood that the terminal device 300 according to the implementation of the present application may correspond to the terminal device in the method implementation of the present application, and the above operations and/or functions and other operations and/or functions of various units in the terminal device 300 are respectively for realizing corresponding processes of the terminal device in the method in FIG. 3, and will not be repeated here for brevity.

FIG.6 is a schematic block diagram of a network device 400 according to an implementation of the present application. As shown in FIG. 6, the terminal device 400 includes a determination module 410 and a communication module 420.

The first sending unit 410 is used for sending first indication information to a terminal device, wherein the first indication information is used for indicating whether a data duplication and transmission function is enabled for each Radio Bearer (RB) in at least one RB.

The receiving unit 420 is used for receiving data sent by the terminal device through the at least one RB.

Therefore, the network device of the implementation of the present application is beneficial to improving flexibility of data transmission.

In an implementation of the present application, the first sending unit 410 is specifically used for sending the first indication information to the terminal device through a Media Access Control (MAC) Control Element (CE).

In an implementation of the present application, the first indication information carries an identification of the each RB, wherein the identification of the each RB is used for indicating that the data duplication and transmission function is enabled for a corresponding RB, or the identification of the each RB is used for indicating that the data duplication and transmission function of a corresponding RB is deactivated.

In an implementation of the present application, the first indication information is a bit map, wherein each bit in the bit map corresponds one-to-one with the each RB, and a value of the each bit indicates whether a data duplication and transmission function is enabled for a corresponding RB.

Optionally, in an implementation of the present application, the first indication information is used for indicating that the data duplication and transmission function is enabled for a first RB in the at least one RB, and the receiving unit is specifically used for receiving duplicated data sent by the terminal device through multiple logical channels corresponding to a Packet Data Convergence Protocol (PDCP) entity corresponding to the first RB.

Optionally, in an implementation of the present application, the network device 400 further includes: a second sending unit, used for, when the PDCP entity corresponds to only one logical channel, sending second indication information to the terminal device, wherein the second indication information is used for indicating at least one other logical channel used for transmitting the duplicated data.

In an implementation of the present application, the receiving unit 420 is specifically used for receiving non-duplicated data sent by the terminal device through a logical channel corresponding to a PDCP entity corresponding to the first RB.

Optionally, in an implementation of the present application, the network device 400 further includes: a second sending unit, used for, when the PDCP entity corresponds to multiple logical channels, sending second indication information to the terminal device, wherein the second indication information is used for indicating a second logical channel not used for transmitting data in the multiple logical channels. Alternatively, the second indication information is used for indicating a first logical channel used for transmitting data in the multiple logical channels, and this alternative is not part of the claimed invention.

Optionally, in an implementation of the present application, the at least one RB includes a Data Radio Bearer (DRB) and/or a Signaling Radio Bearer (SRB).

It should be understood that the network device 400 according to the implementation of the present application may correspond to the network device in the method implementation of the present application, and the above operations and/or functions and other operations and/or functions of various units in the network device 400 are respectively for realizing corresponding processes of the network device in the method in FIG. 4, and will not be repeated here for the sake of brevity.

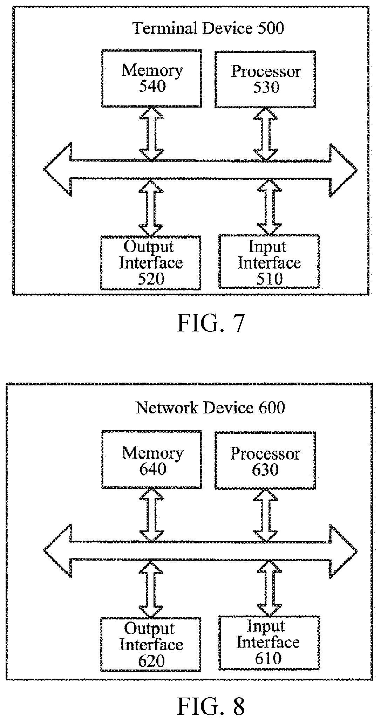

As shown in FIG. 7, an implementation of the present application also provides a terminal device 500, which may be the terminal device 300 in FIG. 5 and is able to be used for performing contents of the method 100 corresponding to the terminal device in FIG. 3. The terminal device 500 includes an input interface 510, an output interface 520, a processor 530, and a memory 540. The input interface 510, the output interface 520, the processor 530, and the memory 540 may be connected through a bus system. The memory 540 is used for storing programs, instructions, or codes. The processor 530 is used for executing the programs, instructions, or codes in the memory 540 to control the input interface 510 to receive signals, to control the output interface 520 to send signals, and to complete the operations in the foregoing method implementations.

Therefore, the terminal device of the implementation of the present application is beneficial to improving flexibility of data transmission.

It should be understood that in the implementation of the present application, the processor 530 may be a Central Processing Unit (CPU), or the processor 530 may be another general purpose processor, a digital signal processor, an application specific integrated circuit, a Field programmable gate array or another programmable logic device, a discrete gate or transistor logic device, a discrete hardware component, etc. The general purpose processor may be a microprocessor or the processor may be any conventional processor or the like.

The memory 540 may include a read-only memory and a random access memory, and provide instructions and data to the processor 530. A portion of memory 540 may include a non-volatile random access memory. For example, the memory 540 may also store type information of a device.

In implementation processes, various acts of the methods described above may be accomplished by integrated logic circuits of hardware or instructions in the form of software in the processor 530. The acts of the method disclosed in connection with the implementations of the present application may be directly embodied to be accomplished by an execution of the hardware processor or by the combination of hardware and software modules in the processor. The software modules may be located in a storage medium commonly used in the art, such as a random access memory, flash memory, read-only memory, programmable read-only memory or electrically erasable programmable memory, or register. The storage medium is located in the memory 540, and the processor 530 reads the information in the memory 540, and accomplishes the contents of the above method in combination with its hardware. In order to avoid repetition, it will not be described in detail here.

In a specific implementation, the first receiving unit and the second receiving unit in the terminal device 300 may be implemented by the input interface 510 in FIG. 7, and the sending unit of the terminal device 300 may be implemented by the output interface 520 in FIG. 7.

As shown in FIG. 8, an implementation of the present application also provides a network device 600, which may be the network device 400 in FIG. 6, and is able to be used for performing contents of the method 200 corresponding to the network device in FIG. 4. The network device 600 includes an input interface 610, an output interface 620, a processor 630, and a memory 640. The input interface 610, the output interface 620, the processor 630, and the memory 640 may be connected through a bus system. The memory 640 is used for storing programs, instructions, or codes. The processor 630 is used for executing the programs, instructions, or codes in the memory 640 to control the input interface 610 to receive signals, to control the output interface 620 to send signals, and to complete the operations in the foregoing method implementations.

Therefore, the network device of the implementation of the present application is beneficial to improving flexibility of data transmission.

It should be understood that in the implementation of the present application, the processor 630 may be a Central Processing Unit (CPU), or the processor 630 may be another general purpose processor, a digital signal processor, an application specific integrated circuit, a Field programmable gate array or another programmable logic device, a discrete gate or transistor logic device, a discrete hardware component, etc. The general purpose processor may be a microprocessor or the processor may be any conventional processor or the like.

The memory 640 may include a read-only memory and a random access memory, and provide instructions and data to the processor 630. A portion of memory 640 may include a non-volatile random access memory. For example, the memory 640 may also store type information of a device.

In implementation processes, various acts of the methods described above may be accomplished by integrated logic circuits of hardware or instructions in the form of software in the processor 630. The acts of the method disclosed in connection with the implementations of the present application may be directly embodied to be accomplished by an execution of the hardware processor or by the combination of hardware and software modules in the processor. The software modules may be located in a storage medium commonly used in the art, such as a random access memory, a flash memory, read-only memory, a programmable read-only memory or an electrically erasable programmable memory, or a register. The storage medium is located in the memory 640, and the processor 630 reads the information in the memory 640, and accomplishes the contents of the above method in combination with its hardware. In order to avoid repetition, it will not be described in detail here.

In a specific implementation, the first sending unit and the second sending unit in the network device 400 may be implemented by the output interface 620 in FIG. 8, and the receiving unit in the network device 400 may be implemented by the input interface 610 in FIG. 8.

Those of ordinary skill in the art will recognize that the exemplary units and algorithm acts described in connection with the implementations disclosed herein may be implemented in electronic hardware, or a combination of computer software and electronic hardware. Whether these functions are implemented in hardware or software depends on a specific application and design constraint of the technical solution. Skilled in the art may use different manners to realize the described functions for each particular application, but such realization should not be considered to be beyond the scope of the present application.

Those skilled in the art may clearly understand that for convenience and conciseness of description, the specific working process of the system, device and unit described above may refer to the corresponding process in the aforementioned implementations of methods, and details are not described herein again.

In several implementations provided by the present application, it should be understood that the disclosed system, apparatus and method may be implemented in other ways. For example, the apparatus implementation described above is only illustrative, for example, the division of the unit is only a logical function division, and there may be other ways of division in actual implementation, for example, multiple units or components may be combined or integrated into another system, or some features may be ignored or not executed. On the other hand, the mutual coupling or direct coupling or communication connection shown or discussed may be indirect coupling or communication connection through some interfaces, devices or units, and may be in electrical, mechanical or other forms.

The unit described as a separate component may or may not be physically separated, and the component shown as a unit may or may not be a physical unit, i.e., may be located in one place or may be distributed over multiple network units. Some or all of the units may be selected according to practical needs to achieve a purpose of the solution of the implementations.

In addition, various functional units in various implementations of the present application may be integrated in one processing unit, or various units may be physically present separately, or two or more units may be integrated in one unit.

The functions may be stored in a computer readable storage medium if implemented in a form of software functional units and sold or used as a separate product. Based on this understanding, the technical solution of the present application, in essence, or the part contributing to the existing art, or the part of the technical solution, may be embodied in the form of a software product stored in a storage medium, including several instructions for causing a computer device (which may be a personal computer, a server, or a network device, etc.) to perform all or part of the acts of various implementations of the present application. The aforementioned storage medium includes various media capable of storing program codes, such as a U disk, a mobile hard disk, a read-only memory (ROM), a random access memory (RAM), a magnetic disk, or an optical disk.

The foregoing are merely exemplary implementations of the present application, but the protection scope of the present application is not limited thereto. Any person skilled in the art may easily conceive variations or substitutions within the technical scope disclosed by the present application, which should be included within the protection scope of the present application. Therefore, the protection scope of the present application shall be the protection scope defined by the claims.

## Claims

1. A method (100) for transmitting data, comprising:
receiving (110), by a terminal device, first indication information sent by a network device through a Media Access Control, MAC, Control Element, CE, wherein the first indication information is used for indicating whether a data duplication and transmission function is enabled for each Radio Bearer, RB, in at least one RB; and
sending (120), by the terminal device, data to the network device according to the first indication information;
**characterized in that** the first indication information carries an identification of the each RB, wherein the identification of the each RB is used for indicating that the data duplication and transmission function is enabled for a corresponding RB, or the identification of the each RB is used for indicating that the data duplication and transmission function of a corresponding RB is deactivated;
sending (120), by the terminal device, the data to the network device according to the first indication information comprises:
sending, by the terminal device, non-duplicated data to the network device through a logical channel corresponding to a Packet Data Convergence Protocol, PDCP, entity corresponding to a first RB of the at least one RB, wherein the data duplication and transmission function of the first RB is determined by the terminal device as deactivated according to the first indication information;
wherein sending, by the terminal device, the non-duplicated data to the network device through the logical channel corresponding to the PDCP entity corresponding to the first RB, comprises:
when the PDCP entity corresponds to a plurality of logical channels, receiving, by the terminal device, second indication information sent by the network device, wherein the second indication information is used for indicating a first logical channel not used for transmitting data in the plurality of logical channels; and
sending, by the terminal device, the non-duplicated data to the network device through a second logical channel except the first logical channel in the plurality of logical channels.

2. The method (100) of claim 1, wherein sending, by the terminal device, the data to the network device according to the first indication information comprises:
sending, by the terminal device, duplicated data to the network device through a plurality of logical channels corresponding to a PDCP entity corresponding to a second RB of the at least one RB, wherein the data duplication and transmission function of the second RB is determined by the terminal device as enabled according to the first indication information.

3. The method (100) of claim 2, wherein before the terminal device sends the duplicated data to the network device through the plurality of logical channels corresponding to the PDCP entity corresponding to the second RB, the method (100) further comprises:
when the PDCP entity corresponds to only one logical channel, receiving, by the terminal device, third indication information, wherein the third indication information is used for indicating at least one other logical channel used for transmitting the duplicated data.

4. A terminal device (300), comprising:
a first receiving unit (310), configured to receive first indication information sent by a network device through a Media Access Control, MAC, Control Element, CE, wherein the first indication information is used for indicating whether a data duplication and transmission function is enabled for each Radio Bearer, RB, in at least one RB; and
a sending unit (320), configured to send data to the network device according to the first indication information;
**characterized in that** the first indication information carries an identification of the each RB, wherein the identification of the each RB is used for indicating that the data duplication and transmission function is enabled for a corresponding RB, or the identification of the each RB is used for indicating that the data duplication and transmission function of a corresponding RB is deactivated;
the terminal device (300) is configured to determine that the data duplication and transmission function of a first RB of the at least one RB is deactivated, and the sending unit (320) is specifically configured to: send non-duplicated data to the network device through a logical channel corresponding to a Packet Data Convergence Protocol, PDCP, entity corresponding to the first RB;
wherein when the PDCP entity corresponds to a plurality of logical channels, the terminal device (300) is configured to receive second indication information sent by the network device, wherein the second indication information is used for indicating a first logical channel not used for transmitting data in the plurality of logical channels; and
the sending unit (320) is specifically configured to: sending the non-duplicated data to the network device through a second logical channel except the first logical channel in the plurality of logical channels.

5. The terminal device (300) of claim 4, wherein the sending unit (320) is specifically configured to:
send duplicated data to the network device through a plurality of logical channels corresponding to a Packet Data Convergence Protocol, PDCP, entity corresponding to a second RB of the at least one RB, wherein the data duplication and transmission function of the second RB is determined by the terminal device as enabled according to the first indication information.

6. The terminal device (300) of claim 4 or 5, wherein the at least one RB comprises a Data Radio Bearer, DRB, and/or a Signaling Radio Bearer, SRB.

7. A method (200) for transmitting data, comprising:
sending (210), by a network device, first indication information to a terminal device through a Media Access Control, MAC, Control Element, CE, wherein the first indication information is used for indicating whether a data duplication and transmission function is enabled for each Radio Bearer, RB, in at least one RB; and
receiving (220), by the network device, data sent by the terminal device through the at least one RB;
**characterized in that** the first indication information carries an identification of the each RB, wherein the identification of the each RB is used for indicating that the data duplication and transmission function is enabled for a corresponding RB, or the identification of the each RB is used for indicating that the data duplication and transmission function of a corresponding RB is deactivated;
the first indication information is used for indicating that the data duplication and transmission function of a first RB of the at least one RB is deactivated, and receiving (220), by the network device, data sent by the terminal device through the at least one RB comprises:
receiving non-duplicated data sent by the terminal device through a logical channel corresponding to a Packet Data Convergence Protocol, PDCP, entity corresponding to the first RB;
the method further comprises:
when the PDCP entity corresponds to a plurality of logical channels, sending, by the network device, second indication information to the terminal device, wherein the second indication information is used for indicating a first logical channel not used for transmitting data in the plurality of logical channels;
wherein the network device receives the non-duplicated data sent by the terminal device through a second logical channel except the first logical channel in the plurality of logical channels.

8. The method (200) of claim 7, wherein the first indication information is used for indicating that the data duplication and transmission function is enabled for a second RB in the at least one RB, and receiving (220), by the network device, data sent by the terminal device through the at least one RB comprises:
receiving duplicated data sent by the terminal device through a plurality of logical channels corresponding to a PDCP entity corresponding to the second RB.

9. The method (200) of claim 8, further comprising:
when the PDCP entity corresponding to the second RB corresponds to only one logical channel, sending, by the network device, third indication information to the terminal device, wherein the third indication information is used for indicating at least one other logical channel used for transmitting the duplicated data.

10. A network device (400), comprising:
a first sending unit (410), configured to send first indication information to a terminal device through a Media Access Control, MAC, Control Element, CE, wherein the first indication information is used for indicating whether a data duplication and transmission function is enabled for each Radio Bearer, RB, in at least one RB; and
a receiving unit (420), configured to receive data sent by the terminal device through the at least one RB;
**characterized in that** the first indication information carries an identification of the each RB, wherein the identification of the each RB is used for indicating that the data duplication and transmission function is enabled for a corresponding RB, or the identification of the each RB is used for indicating that the data duplication and transmission function of a corresponding RB is deactivated;
the first indication information is used for indicating that the data duplication and transmission function of a first RB of the at least one RB is deactivated, and the receiving unit (420) is specifically configured to receive non-duplicated data sent by the terminal device through a logical channel corresponding to a Packet Data Convergence Protocol, PDCP, entity corresponding to the first RB;
wherein the network device (400) further comprises:
a second sending unit configured to, when the PDCP entity corresponds to a plurality of logical channels, send second indication information to the terminal device, wherein the second indication information is used for indicating a first logical channel not used for transmitting data in the plurality of logical channels;
wherein the receiving unit (420) is configured to receive the non-duplicated data sent by the terminal device through a second logical channel except the first logical channel in the plurality of logical channels.

11. The network device (400) of claim 10, wherein the first indication information is used for indicating that the data duplication and transmission function is enabled for a second RB in the at least one RB;
the receiving unit (420) is specifically configured to: receive duplicated data sent by the terminal device through a plurality of logical channels corresponding to a PDCP entity corresponding to the second RB.

## Patentansprüche

1. Verfahren (100) zum Übertragen von Daten, das Folgendes umfasst:
Empfangen (110), durch eine Endgerätvorrichtung, von ersten Anzeigeinformationen, die durch eine Netzwerkvorrichtung über ein Medienzugriffssteuerungs-, MAC, Steuerelement, CE, gesendet werden, wobei die ersten Anzeigeinformationen zum Anzeigen verwendet werden, ob eine Datenduplizierungs- und Übertragungsfunktion für jeden Funkträger, RB, in mindestens einem RB aktiviert ist; und
Senden (120), durch die Endgerätvorrichtung, von Daten an die Netzwerkvorrichtung gemäß den ersten Anzeigeinformationen;
**dadurch gekennzeichnet, dass** die ersten Anzeigeinformationen eine Identifikation des jeweiligen RB tragen, wobei die Identifikation des jeweiligen RB zum Anzeigen verwendet wird, dass die Datenduplizierungs- und Übertragungsfunktion für einen entsprechenden RB aktiviert ist, oder die Identifikation des jeweiligen RB zum Anzeigen verwendet wird, dass die Datenduplizierungs- und Übertragungsfunktion eines entsprechenden RB deaktiviert ist;
wobei Senden (120), durch die Endgerätvorrichtung, der Daten an die Netzwerkvorrichtung gemäß den ersten Anzeigeinformationen Folgendes umfasst:
Senden, durch die Endgerätvorrichtung, von nicht-duplizierten Daten an die Netzwerkvorrichtung über einen logischen Kanal, der einer Paketdatenkonvergenzprotokoll-, PDCP, Entität entspricht, die einem ersten RB des mindestens einen RB entspricht, wobei die Datenduplizierungs- und Übertragungsfunktion des ersten RB durch die Endgerätvorrichtung gemäß den ersten Anzeigeinformationen als deaktiviert bestimmt wird;
wobei Senden, durch die Endgerätvorrichtung, der nicht-duplizierten Daten an die Netzwerkvorrichtung über den logischen Kanal, der der PDCP-Entität entspricht, die dem ersten RB entspricht, Folgendes umfasst:
wenn die PDCP-Entität einer Mehrzahl von logischen Kanälen entspricht, Empfangen, durch die Endgerätvorrichtung, von durch die Netzwerkvorrichtung gesendeten zweiten Anzeigeinformationen, wobei die zweiten Anzeigeinformationen zum Anzeigen eines ersten logischen Kanals verwendet werden, der nicht zum Übertragen von Daten in der Mehrzahl von logischen Kanälen verwendet wird; und
Senden, durch die Endgerätvorrichtung, der nicht-duplizierten Daten an die Netzwerkvorrichtung über einen zweiten logischen Kanal außer dem ersten logischen Kanal in der Mehrzahl von logischen Kanälen.

2. Verfahren (100) nach Anspruch 1, wobei Senden, durch die Endgerätvorrichtung, der Daten an die Netzwerkvorrichtung gemäß den ersten Anzeigeinformationen Folgendes umfasst:
Senden, durch die Endgerätvorrichtung, von duplizierten Daten an die Netzwerkvorrichtung über eine Mehrzahl von logischen Kanälen, die einer PDCP-Entität entspricht, die einem zweiten RB des mindestens einen RB entspricht, wobei die Datenduplizierungs- und Übertragungsfunktion des zweiten RB durch die Endgerätvorrichtung gemäß den ersten Anzeigeinformationen als aktiviert bestimmt wird.

3. Verfahren (100) nach Anspruch 2, wobei, bevor die Endgerätvorrichtung die duplizierten Daten an die Netzwerkvorrichtung über die Mehrzahl von logischen Kanälen sendet, die der PDCP-Entität entspricht, die dem zweiten RB entspricht, das Verfahren (100) ferner Folgendes umfasst:
wenn die PDCP-Entität nur einem logischen Kanal entspricht, Empfangen, durch die Endgerätvorrichtung, von dritten Anzeigeinformationen, wobei die dritten Anzeigeinformationen zum Anzeigen mindestens eines anderen logischen Kanals verwendet werden, der zum Übertragen der duplizierten Daten verwendet wird.

4. Endgerätvorrichtung (300), umfassend:
eine erste Empfangseinheit (310), die dazu konfiguriert ist, erste Anzeigeinformationen zu empfangen, die durch eine Netzwerkvorrichtung über ein Medienzugriffssteuerungs-, MAC, Steuerelement, CE, gesendet werden, wobei die ersten Anzeigeinformationen zum Anzeigen verwendet werden, ob eine Datenduplizierungs- und Übertragungsfunktion für jeden Funkträger, RB, in mindestens einem RB aktiviert ist; und
eine Sendeeinheit (320), die dazu konfiguriert ist, Daten an die Netzwerkvorrichtung gemäß den ersten Anzeigeinformationen zu senden;
**dadurch gekennzeichnet, dass** die ersten Anzeigeinformationen eine Identifikation des jeweiligen RB tragen, wobei die Identifikation des jeweiligen RB zum Anzeigen verwendet wird, dass die Datenduplizierungs- und Übertragungsfunktion für einen entsprechenden RB aktiviert ist, oder die Identifikation des jeweiligen RB zum Anzeigen verwendet wird, dass die Datenduplizierungs- und Übertragungsfunktion eines entsprechenden RB deaktiviert ist;
wobei die Endgerätvorrichtung (300) dazu konfiguriert ist, zu bestimmen, dass die Datenduplizierungs- und Übertragungsfunktion eines ersten RB des mindestens einen RB deaktiviert ist, und die Sendeeinheit (320) insbesondere zu Folgendem konfiguriert ist: Senden von nicht-duplizierten Daten an die Netzwerkvorrichtung über einen logischen Kanal, der einer Paketdatenkonvergenzprotokoll-, PDCP, Entität entspricht, die dem ersten RB entspricht;
wobei, wenn die PDCP-Entität einer Mehrzahl von logischen Kanälen entspricht, die Endgerätvorrichtung (300) dazu konfiguriert ist, durch die Netzwerkvorrichtung gesendete zweite Anzeigeinformationen zu empfangen, wobei die zweiten Anzeigeinformationen zum Anzeigen eines ersten logischen Kanals verwendet werden, der nicht zum Übertragen von Daten in der Mehrzahl von logischen Kanälen verwendet wird; und
wobei die Sendeeinheit (320) insbesondere zu Folgendem konfiguriert ist: Senden der nicht-duplizierten Daten an die Netzwerkvorrichtung über einen zweiten logischen Kanal außer dem ersten logischen Kanal in der Mehrzahl von logischen Kanälen.

5. Endgerätvorrichtung (300) nach Anspruch 4, wobei die Sendeeinheit (320) insbesondere zu Folgendem konfiguriert ist:
Senden von duplizierten Daten an die Netzwerkvorrichtung über eine Mehrzahl von logischen Kanälen, die einer Paketdatenkonvergenzprotokoll-, PDCP, Entität entspricht, die einem zweiten RB des mindestens einen RB entspricht, wobei die Datenduplizierungs- und Übertragungsfunktion des zweiten RB durch die Endgerätvorrichtung gemäß den ersten Anzeigeinformationen als aktiviert bestimmt wird.

6. Endgerätvorrichtung (300) nach Anspruch 4 oder 5, wobei der mindestens eine RB einen Datenfunkträger, DRB, und/oder einen Signalisierungsfunkträger, SRB, umfasst.

7. Verfahren (200) zum Übertragen von Daten, das Folgendes umfasst:
Senden (210), durch eine Netzwerkvorrichtung, von ersten Anzeigeinformationen an eine Endgerätvorrichtung über ein Medienzugriffssteuerungs-, MAC, Steuerelement, CE, wobei die ersten Anzeigeinformationen zum Anzeigen verwendet werden, ob eine Datenduplizierungs- und Übertragungsfunktion für jeden Funkträger, RB, in mindestens einem RB aktiviert ist; und
Empfangen (220), durch die Netzwerkvorrichtung, von Daten, die durch die Endgerätvorrichtung über den mindestens einen RB gesendet werden;
**dadurch gekennzeichnet, dass** die ersten Anzeigeinformationen eine Identifikation des jeweiligen RB tragen, wobei die Identifikation des jeweiligen RB zum Anzeigen verwendet wird, dass die Datenduplizierungs- und Übertragungsfunktion für einen entsprechenden RB aktiviert ist, oder die Identifikation des jeweiligen RB zum Anzeigen verwendet wird, dass die Datenduplizierungs- und Übertragungsfunktion eines entsprechenden RB deaktiviert ist;
wobei die ersten Anzeigeinformationen zum Anzeigen verwendet werden, dass die Datenduplizierungs- und Übertragungsfunktion eines ersten RB des mindestens einen RB deaktiviert ist, und wobei Empfangen (220), durch die Netzwerkvorrichtung, von Daten, die durch die Endgerätvorrichtung über den mindestens einen RB gesendet werden, Folgendes umfasst:
Empfangen von nicht-duplizierten Daten, die durch die Endgerätvorrichtung über einen logischen Kanal gesendet werden, der einer Paketdatenkonvergenzprotokoll-, PDCP, Entität entspricht, die dem ersten RB entspricht;
wobei das Verfahren ferner Folgendes umfasst:
wenn die PDCP-Entität einer Mehrzahl von logischen Kanälen entspricht, Senden, durch die Netzwerkvorrichtung, von zweiten Anzeigeinformationen an die Endgerätvorrichtung, wobei die zweiten Anzeigeinformationen zum Anzeigen eines ersten logischen Kanals verwendet werden, der nicht zum Übertragen von Daten in der Mehrzahl von logischen Kanälen verwendet wird;
wobei die Netzwerkvorrichtung die nicht-duplizierten Daten empfängt, die durch die Endgerätvorrichtung über einen zweiten logischen Kanal außer dem ersten logischen Kanal in der Mehrzahl von logischen Kanälen gesendet werden.

8. Verfahren (200) nach Anspruch 7, wobei die ersten Anzeigeinformationen zum Anzeigen verwendet werden, dass die Datenduplizierungs- und Übertragungsfunktion für einen zweiten RB in dem mindestens einen RB aktiviert ist, und wobei Empfangen (220), durch die Netzwerkvorrichtung, von Daten, die durch die Endgerätvorrichtung über den mindestens einen RB gesendet werden, Folgendes umfasst:
Empfangen von duplizierten Daten, die durch die Endgerätvorrichtung über eine Mehrzahl von logischen Kanälen gesendet werden, die einer PDCP-Entität entspricht, die dem zweiten RB entspricht.

9. Verfahren (200) nach Anspruch 8, das ferner Folgendes umfasst:
wenn die PDCP-Entität, die dem zweiten RB entspricht, nur einem logischen Kanal entspricht, Senden, durch die Netzwerkvorrichtung, von dritten Anzeigeinformationen an die Endgerätvorrichtung, wobei die dritten Anzeigeinformationen zum Anzeigen mindestens eines anderen logischen Kanals verwendet werden, der zum Übertragen der duplizierten Daten verwendet wird.

10. Netzwerkvorrichtung (400), umfassend:
eine erste Sendeeinheit (410), die dazu konfiguriert ist, erste Anzeigeinformationen an eine Endgerätvorrichtung über ein Medienzugriffssteuerungs-, MAC, Steuerelement, CE, zu senden, wobei die ersten Anzeigeinformationen zum Anzeigen verwendet werden, ob eine Datenduplizierungs- und Übertragungsfunktion für jeden Funkträger, RB, in mindestens einem RB aktiviert ist; und
eine Empfangseinheit (420), die dazu konfiguriert ist, Daten zu empfangen, die durch die Endgerätvorrichtung über den mindestens einen RB gesendet werden;
**dadurch gekennzeichnet, dass** die ersten Anzeigeinformationen eine Identifikation des jeweiligen RB tragen, wobei die Identifikation des jeweiligen RB zum Anzeigen verwendet wird, dass die Datenduplizierungs- und Übertragungsfunktion für einen entsprechenden RB aktiviert ist, oder die Identifikation des jeweiligen RB zum Anzeigen verwendet wird, dass die Datenduplizierungs- und Übertragungsfunktion eines entsprechenden RB deaktiviert ist;
wobei die ersten Anzeigeinformationen zum Anzeigen verwendet werden, dass die Datenduplizierungs- und Übertragungsfunktion eines ersten RB des mindestens einen RB deaktiviert ist, und wobei die Empfangseinheit (420) insbesondere dazu konfiguriert ist, nicht-duplizierte Daten zu empfangen, die durch die Endgerätvorrichtung über einen logischen Kanal gesendet werden, der einer Paketdatenkonvergenzprotokoll-, PDCP, Entität entspricht, die dem ersten RB entspricht;
wobei die Netzwerkvorrichtung (400) ferner Folgendes umfasst:
eine zweite Sendeeinheit, die dazu konfiguriert ist, wenn die PDCP-Entität einer Mehrzahl von logischen Kanälen entspricht, zweite Anzeigeinformationen an die Endgerätvorrichtung zu senden, wobei die zweiten Anzeigeinformationen zum Anzeigen eines ersten logischen Kanals verwendet werden, der nicht zum Übertragen von Daten in der Mehrzahl von logischen Kanälen verwendet wird;
wobei die Empfangseinheit (420) dazu konfiguriert ist, die nicht-duplizierten Daten zu empfangen, die durch die Endgerätvorrichtung über einen zweiten logischen Kanal außer dem ersten logischen Kanal in der Mehrzahl von logischen Kanälen gesendet werden.

11. Netzwerkvorrichtung (400) nach Anspruch 10, wobei die ersten Anzeigeinformationen zum Anzeigen verwendet werden, dass die Datenduplizierungs- und Übertragungsfunktion für einen zweiten RB in dem mindestens einen RB aktiviert ist;
wobei die Empfangseinheit (420) insbesondere zu Folgendem konfiguriert ist: Empfangen von duplizierten Daten, die durch die Endgerätvorrichtung über eine Mehrzahl von logischen Kanälen gesendet werden, die einer PDCP-Entität entspricht, die dem zweiten RB entspricht.

## Revendications

1. Procédé de transmission (100) de données, comprenant les étapes consistant à :
recevoir (110), par un dispositif terminal, des premières informations d'indication envoyées par un dispositif de réseau par l'intermédiaire d'un élément de commande (CE) de contrôle d'accès au support (MAC), les premières informations d'indication étant utilisées pour indiquer si une fonction de duplication et de transmission de données est activée pour chaque porteuse radio (RB) parmi au moins une RB ; et
envoyer (120), par le dispositif terminal, des données au dispositif de réseau selon les premières informations d'indication ;
**caractérisé en ce que** les premières informations d'indication transportent une identification de chaque RB, l'identification de chaque RB étant utilisée pour indiquer que la fonction de duplication et de transmission de données est activée pour une RB correspondante ou bien l'identification de chaque RB étant utilisée pour indiquer que la fonction de duplication et de transmission de données d'une RB correspondante est désactivée ;
l'envoi (120), par le dispositif terminal, des données au dispositif de réseau selon les premières informations d'indication comprenant l'étape consistant à :
envoyer, par le dispositif terminal, des données non dupliquées au dispositif de réseau par l'intermédiaire d'un canal logique correspondant à une entité sur protocole de convergence de données en mode paquet (PDCP) correspondant à une première RB parmi l'au moins une RB, la fonction de duplication et de transmission de données de la première RB étant déterminée par le dispositif terminal comme étant désactivée selon les premières informations d'indication ;
l'envoi, par le dispositif terminal, des données non dupliquées au dispositif de réseau par l'intermédiaire du canal logique correspondant à l'entité PDCP correspondant à la première RB comprenant les étapes consistant à :
lorsque l'entité PDCP correspond à une pluralité de canaux logiques, recevoir, par le dispositif terminal, des deuxièmes informations d'indication envoyées par le dispositif de réseau, les deuxièmes informations d'indication étant utilisées pour indiquer un premier canal logique non utilisé pour transmettre des données parmi la pluralité de canaux logiques ; et
envoyer, par le dispositif terminal, les données non dupliquées au dispositif de réseau par l'intermédiaire d'un second canal logique, à l'exception du premier canal logique, parmi la pluralité de canaux logiques.

2. Procédé (100) selon la revendication 1, dans lequel l'envoi, par le dispositif terminal, des données au dispositif de réseau selon les premières informations d'indication comprend l'étape consistant à :
envoyer, par le dispositif terminal, des données dupliquées au dispositif de réseau par l'intermédiaire d'une pluralité de canaux logiques correspondant à une entité PDCP correspondant à une seconde RB parmi l'au moins une RB, la fonction de duplication et de transmission de données de la seconde RB étant déterminée par le dispositif terminal comme étant activée selon les premières informations d'indication.

3. Procédé (100) selon la revendication 2, le procédé (100) comprenant en outre, avant que le dispositif terminal n'envoie les données dupliquées au dispositif de réseau par l'intermédiaire de la pluralité de canaux logiques correspondant à l'entité PDCP correspondant à la seconde RB, l'étape consistant à :
lorsque l'entité PDCP correspond à un seul canal logique, recevoir, par le dispositif terminal, des troisièmes informations d'indication, les troisièmes informations d'indication étant utilisées pour indiquer au moins un autre canal logique utilisé pour transmettre les données dupliquées.

4. Dispositif terminal (300), comprenant :
une première unité de réception (310), configurée pour des premières informations d'indication envoyées par un dispositif de réseau par l'intermédiaire d'un élément de commande (CE) de contrôle d'accès au support (MAC), les premières informations d'indication étant utilisées pour indiquer si une fonction de duplication et de transmission de données est activée pour chaque porteuse radio (RB) parmi au moins une RB ; et
une unité d'envoi (320), configurée pour envoyer des données au dispositif de réseau selon les premières informations d'indication ;
**caractérisé en ce que** les premières informations d'indication transportent une identification de chaque RB, l'identification de chaque RB étant utilisée pour indiquer que la fonction de duplication et de transmission de données est activée pour une RB correspondante ou bien l'identification de chaque RB étant utilisée pour indiquer que la fonction de duplication et de transmission de données d'une RB correspondante est désactivée ;
le dispositif terminal (300) étant configuré pour déterminer que la fonction de duplication et de transmission de données d'une première RB parmi l'au moins une RB est désactivée, et l'unité d'envoi (320) étant spécifiquement configurée pour : envoyer des données non dupliquées au dispositif de réseau par l'intermédiaire d'un canal logique correspondant à une entité sur protocole de convergence de données en mode paquet (PDCP) correspondant à la première RB ;
lorsque l'entité PDCP correspond à une pluralité de canaux logiques, le dispositif terminal (300) étant configuré pour recevoir des deuxièmes informations d'indication envoyées par le dispositif de réseau, les deuxièmes informations d'indication étant utilisées pour indiquer un premier canal logique non utilisé pour transmettre des données parmi la pluralité de canaux logiques ; et
l'unité d'envoi (320) étant spécifiquement configurée pour : envoyer les données non dupliquées au dispositif de réseau par l'intermédiaire d'un second canal logique, à l'exception du premier canal logique, parmi la pluralité de canaux logiques.

5. Dispositif terminal (300) selon la revendication 4, dans lequel l'unité d'envoi (320) est spécifiquement configurée pour :
envoyer des données dupliquées au dispositif de réseau par l'intermédiaire d'une pluralité de canaux logiques correspondant à une entité sur protocole de convergence de données en mode paquet (PDCP) correspondant à une seconde RB parmi l'au moins une RB, la fonction de duplication et de transmission de données de la seconde RB étant déterminée par le dispositif terminal comme étant activée selon les premières informations d'indication.

6. Dispositif terminal (300) selon la revendication 4 ou 5, dans lequel l'au moins une RB comprend une porteuse radio de données (DRB) et/ou une porteuse radio de signalisation (SRB).

7. Procédé de transmission (200) de données, comprenant les étapes consistant à :
envoyer (210), par un dispositif de réseau, des premières informations d'indication à un dispositif terminal par l'intermédiaire d'un élément de commande (CE) de contrôle d'accès au support (MAC), les premières informations d'indication étant utilisées pour indiquer si une fonction de duplication et de transmission de données est activée pour chaque porteuse radio (RB) parmi au moins une RB ; et
recevoir (220), par le dispositif de réseau, des données envoyées par le dispositif terminal par l'intermédiaire de l'au moins une RB ;
**caractérisé en ce que** les premières informations d'indication transportent une identification de chaque RB, l'identification de chaque RB étant utilisée pour indiquer que la fonction de duplication et de transmission de données est activée pour une RB correspondante ou bien l'identification de chaque RB étant utilisée pour indiquer que la fonction de duplication et de transmission de données d'une RB correspondante est désactivée ;
les premières informations d'indication étant utilisées pour indiquer que la fonction de duplication et de transmission de données d'une première RB parmi l'au moins une RB est désactivée, et la réception (220), par le dispositif de réseau, de données envoyées par le dispositif terminal par l'intermédiaire de l'au moins une RB comprenant l'étape consistant à :
recevoir des données non dupliquées envoyées par le dispositif terminal par l'intermédiaire d'un canal logique correspondant à une entité sur protocole de convergence de données en mode paquet (PDCP) correspondant à la première RB ;
le procédé comprenant en outre l'étape consistant à :
lorsque l'entité PDCP correspond à une pluralité de canaux logiques, envoyer, par le dispositif de réseau, des deuxièmes informations d'indication au dispositif terminal, les deuxièmes informations d'indication étant utilisées pour indiquer un premier canal logique non utilisé pour transmettre des données parmi la pluralité de canaux logiques ;
le dispositif de réseau recevant les données non dupliquées envoyées par le dispositif terminal par l'intermédiaire d'un second canal logique, à l'exception du premier canal logique, parmi la pluralité de canaux logiques.

8. Procédé (200) selon la revendication 7, dans lequel les premières informations d'indication sont utilisées pour indiquer que la fonction de duplication et de transmission de données est activée pour une seconde RB parmi l'au moins une RB, et la réception (220), par le dispositif de réseau, de données envoyées par le dispositif terminal par l'intermédiaire de l'au moins une RB comprenant l'étape consistant à :
recevoir des données dupliquées envoyées par le dispositif terminal par l'intermédiaire d'une pluralité de canaux logiques correspondant à une entité PDCP correspondant à la seconde RB.

9. Procédé (200) selon la revendication 8, comprenant en outre l'étape consistant à :
lorsque l'entité PDCP correspondant à la seconde RB correspond à un seul canal logique, envoyer, par le dispositif de réseau, des troisièmes informations d'indication au dispositif terminal, les troisièmes informations d'indication étant utilisées pour indiquer au moins un autre canal logique utilisé pour transmettre les données dupliquées.

10. Dispositif de réseau (400), comprenant :
une première unité d'envoi (410), configurée pour envoyer des premières informations d'indication à un dispositif terminal par l'intermédiaire d'un élément de commande (CE) de contrôle d'accès au support (MAC), les premières informations d'indication étant utilisées pour indiquer si une fonction de duplication et de transmission de données est activée pour chaque porteuse radio (RB) parmi au moins une RB ; et
une unité de réception (420), configurée pour recevoir des données envoyées par le dispositif terminal par l'intermédiaire de l'au moins une RB ;
**caractérisé en ce que** les premières informations d'indication transportent une identification de chaque RB, l'identification de chaque RB étant utilisée pour indiquer que la fonction de duplication et de transmission de données est activée pour une RB correspondante ou bien l'identification de chaque RB étant utilisée pour indiquer que la fonction de duplication et de transmission de données d'une RB correspondante est désactivée ;
les premières informations d'indication étant utilisées pour indiquer que la fonction de duplication et de transmission de données d'une première RB parmi l'au moins une RB est désactivée, et l'unité de réception (420) étant spécifiquement configurée pour recevoir des données non dupliquées envoyées par le dispositif terminal par l'intermédiaire d'un canal logique correspondant à une entité sur protocole de convergence de données en mode paquet (PDCP) correspondant à la première RB ;
le dispositif de réseau (400) comprenant en outre :
une seconde unité d'envoi, configurée pour, lorsque l'entité PDCP correspond à une pluralité de canaux logiques, envoyer des deuxièmes informations d'indication au dispositif terminal, les deuxièmes informations d'indication étant utilisées pour indiquer un premier canal logique non utilisé pour transmettre des données parmi la pluralité de canaux logiques ;
l'unité de réception (420) étant configurée pour recevoir les données non dupliquées envoyées par le dispositif terminal par l'intermédiaire d'un second canal logique, à l'exception du premier canal logique, parmi la pluralité de canaux logiques.

11. Dispositif de réseau (400) selon la revendication 10, dans lequel les premières informations d'indication sont utilisées pour indiquer que la fonction de duplication et de transmission de données est activée pour une seconde RB parmi l'au moins une RB ;
l'unité de réception (420) étant spécifiquement configurée pour : recevoir des données dupliquées envoyées par le dispositif terminal par l'intermédiaire d'une pluralité de canaux logiques correspondant à une entité PDCP correspondant à la seconde RB.
